## Europäisches Patentamt
## European Patent Office
## Office européen des brevets

(19)

(11) Veröffentlichungsnummer: **0 034 288**
A1

(12) # EUROPÄISCHE PATENTANMELDUNG

(21) Anmeldenummer: **81100685.7**

(22) Anmeldetag: **30.01.81**

(51) Int. Cl.³: **H 02 H 9/04**
**H 02 H 9/06, H 04 M 3/18**

(30) Priorität: **15.02.80 DE 3005618**

(43) Veröffentlichungstag der Anmeldung:
**26.08.81 Patentblatt 81/34**

(84) Benannte Vertragsstaaten:
**AT BE DE FR GB SE**

(71) Anmelder: **TE KA DE Felten & Guilleaume**
**Fernmeldeanlagen GmbH**
**Thurn-und-Taxis-Strasse 10 Postfach 4943**
**D-8500 Nürnberg 1(DE)**

(72) Erfinder: **Robra, Jörg, Dr. Ing.**
**Hallerstrasse 7**
**D-8501 Heroldsberg(DE)**

(72) Erfinder: **Banzer, Günter, Ing. grad.**
**Am Hochgericht 3a**
**D-8600 Bamberg(DE)**

(54) **Schaltungsanordnung zum Abfangen überhöhter Spannungen.**

(57) Im Hauptverteiler einer Nebenstellen-Vermittlungsanlage werden die Fernsprechadern (10, 11), gegeneinander mit Richtleitern (a1.., b1..) gesichert, einer aus parallel geschalteten Gasentladungsröhren (12) und Zenerdioden (13) bestehenden Schutzchaltung zugeführt, die außerhalb der Leiterplatten für die Richteiter befestigt sind.

EP 0 034 288 A1

./...

Fig. 1

TE KA DE  Felten & Guilleaume
Fernmeldeanlagen GmbH

Den 11.02.1980
P 80445

## Schaltungsanordnung zum Abfangen überhöhter Spannungen

Die Erfindung betrifft eine Schaltungsanordnung zum Abfangen überhöhter Spannungen in Adern elektronischer Anlagen, insbesondere für Nebenstellen-Vermittlungsanlagen, mit Gasentladungsröhren und belastbaren Dioden mit Grenzwerteigenschaften. Derartige Schaltungen werden verwendet, um Fernsprechleitungen mit den angeschlossenen spannungsempfindlichen elektronischen Bauelementen gegen störende Einwirkungen überhöhter Spannungen, die beispielsweise bei Blitzeinschlag oder Induktion aus fremden Starkstromnetzen entstehen, abzuschirmen.

In einer aus der DE-OS 27 54 409 bekannten Schaltungsanordnung werden Zenerdioden zum Festklemmen einer Spannung auf einen bestimmten Wert verwendet. Bei Anwendung solcher Schutzschaltungen für eine Vielzahl von Leitungen einer Vermittlungsanlage wäre daher der Aufwand vieler Zenerdioden erforderlich. Ein solcher Aufwand kann aber bei dem bereits mit Bauelementen besetzten Hauptverteiler aus Platzgründen nicht mehr getrieben werden, obwohl dies gerade dort erwünscht wäre, weil dort die zu schützenden Leitungen zusammenlaufen.

Der Erfindung liegt die Aufgabe zugrunde, die Anzahl erforderlicher Bauelemente zu reduzieren, um eine raumsparende und möglichst in der Nähe der zu schützenden Leitungen einer Vermittlungsanlage montierbare Schaltung zu schaffen.

Diese Aufgabe wird bei einer Schaltungsanordnung der eingangs genannten Art dadurch gelöst, daß die Fernsprechadern,         durch Richtleiter voneinander getrennt, je einer Sammelleitung eines Leitungspaares aufgeschaltet sind und daß an je eine Sammelleitung mindestens eine Überspannungsableitungsröhre und eine belastungsfähige Begrenzungsdiode parallel gegen Erde geschaltet sind.

Der Erfindung lag die Erkenntnis zugrunde, daß als Schutzbauelemente sogenannte Überspannungsableitungsröhren oder Begrenzungsdioden mehrfach verwendbar sind, wenn dafür gesorgt wird, daß die einzelnen Leitungen einer Vermittlungsanlage genügend gegeneinander abgesichert sind. Die Schutzbauelemente sind so dimensioniert, daß alle gleichzeitig auftretenden Störungen abgefangen werden. Für eine Anlage ist daher nur eine regenerationsfähige Schutzeinrichtung erforderlich.

Weitere vorteilhafte Ausgestaltungen der Erfindung sind den Unteransprüchen und der Erläuterung eines Ausführungsbeispieles anhand der beigefügten Zeichnung zu entnehmen. Es zeigen:

Fig.1 einen Plan der Schaltungsanordnung.

Fig.2 in dreidimensionaler Ansicht einen Hauptverteiler mit einer Karte für die in Fig.1 dargestellte Schaltung.

Der Ausschnitt/im weiteren nicht dargestellten und an sich bekannten Vermittlungsanlage zeigt im Bereich II drei parallel zueinander verlaufende Adernpaare, deren Adern üblicherweise mit a und b bezeichnet werden. Die Adern a1 bis b3 werden über Richtleiter 10 an die Sammelleitung K angeschlossen, während Richtleiter 11 zum Anschluß der Adernpaare an die Sammelleitung L vorgesehen sind. Die Sammelleitungen K und L führen jeweils die positive bzw. negative Gleichspannung an die im Bereich I gezeichnete Schutzeinrichtung.

Die Schutzeinrichtung besteht aus zwei von jeder Sammelleitung ausgehenden, gegen eine gemeinsame Erdleitung geschalteten Überspannungsableitern 12 und parallel dazu geschalteten, hoch belastbaren Begrenzungsdioden 13, beispielsweise Zenerdioden.

Während die Richtleiter 10 und 11 der einzelnen Sprechadern in Stromrichtung geschaltet sind, um lediglich gegenseitige Beeinflussung störender Spannungen auszuschließen, sind die Begrenzungsdioden an den Sammelleitungen in entgegengesetzter Richtung geschaltet. Normalerweise trennen also die Begrenzungsdioden die beiden Schutzleitungen voneinander, werden aber bei Überschreitung einer vorgegebenen Mindestspannung leitend, um die unerwünschte Überspannung auf die Erdleitung 14 abgeben zu können.

Die zu den Überspannungsableitern 12 parallelgeschalteten Zenerdioden 13 erweitern deren Schutzbereich beträchtlich. Während nämlich die Überspannungsableiter 12 nur bei besonders hohen Spannungen ansprechen, die insbesondere bei Blitzeinschlag auftreten, reagieren die Zenerdioden 13 bereits vor dem Ansprechen der Gasentladungsröhren in wesentlich engeren Grenzen. Dadurch werden insbesondere Spannungen aus benachbarten Netzen abgefangen, die bei den empfindlichen elektronischen Bauelementen große Schäden hervorrufen würden.

Ohne die Überspannungsableiter 12 wäre bei Auftreten entsprechend hoher Spannungen mit der Zerstörung einer Zenerdiode zu rechnen. Der gestaffelte Aufbau von Schutzbauelementen dient sogar auch zum Schutz der Bauelemente gegeneinander.

Die Anzahl der Leitungen, die an eine im Bereich I dargestellte Schutzschaltung anschließbar ist, ist lediglich von der Größe der Anlage begrenzt. Das heißt, die im Bereich I dargestellte Schutzschaltung könnte sämtliche in einer Anlage enthaltenen Leitungen schützen, wenn für alle Leitungen entsprechende Anschlüsse vorgesehen sind. Es ist sogar möglich, die einzige in einer Anlage vorhandene Schutzschaltung auch für fremde Anlagen mitzubenutzen, weil die Schutzbauelemente regenerationsfähig sind und in gewissem Abstand alle nacheinander auftretenden Störfälle kompensieren.

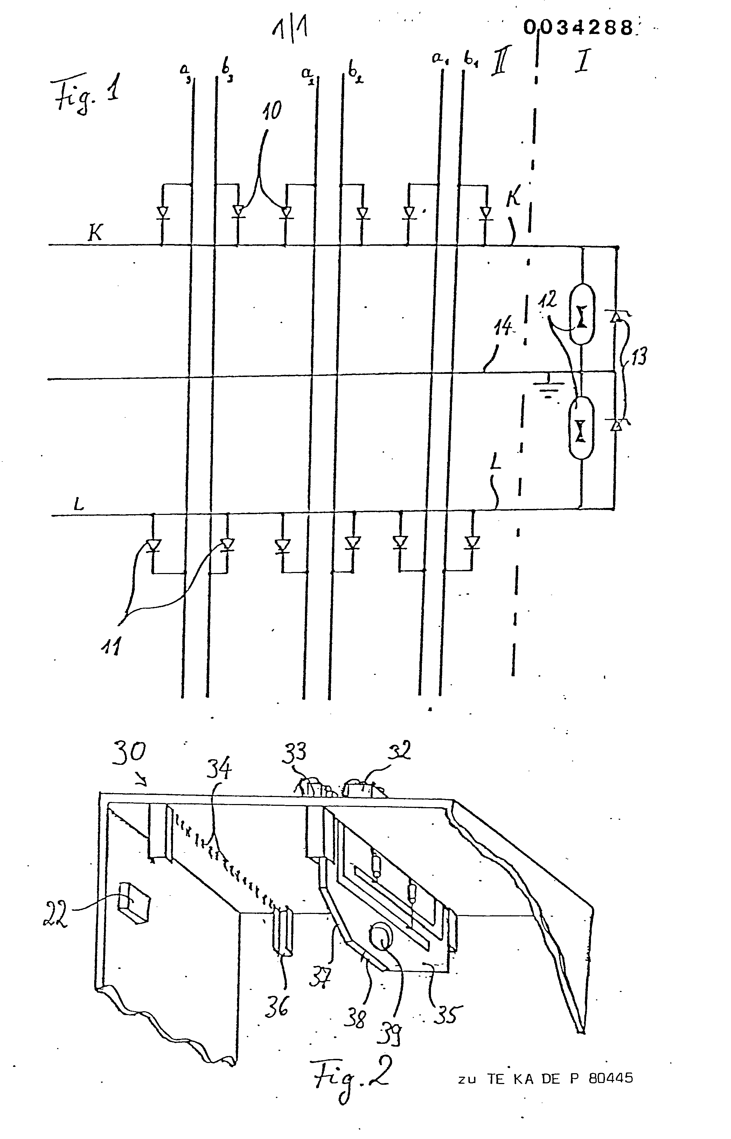

Als Anwendungsfall ist in Fig.2 der Hauptverteiler 30 einer im weiteren nicht gezeichneten Vermittlungsanlage von unten gesehen und abgebrochen gezeichnet dargestellt, um die räumliche Anordnung der Leiterplatte 31 des Verteilers herauszustellen.

Die im Kopf eines Gestelles einer Vermittlungsanlage angebrachte Leiterplatte 31 ist über den darunterliegenden Baugruppen mit ausreichendem Abstand montiert, um von der Unterseite sogenannte Blitzschutzkarten 35 einbringen zu können. Während auf der von der Zeichnung verdeckten Oberfläche Kontakte 32 und Rangierstecker 33 je nach Zuordnung der Anschlüsse angebracht werden, befinden sich diesen gegenüber auf der anderen Leiterplattenseite die Blitzschutzkarten 35 mit der gleichen Parallelausrichtung, und zwar jeweils zwischen einer Reihe Kontaktblöcke 32 und Rangierstecker 33 eine Blitzschutzkarte 35.

Auf der linken Seite der Leiterplatte 31 ist in Fig.2 eine Anschlußreihe 34 ohne Blitzschutzkarte, jedoch mit vormontierten Führungsleisten 36 dargestellt, während auf der rechten Seite parallel versetzt dazu eine in einer Anschlußreihe steckende Blitzschutzkarte 35 gezeigt ist. Selbstverständlich können bei einem anderen, nicht dargestellten Hauptverteiler auch mehrere Reihen von Kontaktblöcken, Rangiersteckern und Blitzschutzkarten vorgesehen sein, wobei im Einzelfall noch entschieden werden kann, ob alle Blitzschutzkarten benötigt, d.h. besetzt werden.

Blitzschutzkarten werden auf verschiedene Weise mit
den zugehörigen Anschlüssen des Hauptverteilers lösbar verbunden, beispielsweise durch Randverbinderleisten. Die Verbindungsart ist zwar prinzipiell
nicht erfindungswesentlich. Es sind aber besonders vorteilhafte raumsparende Anordnungen mit Verbindersystemen möglich, die danach ausgewählt sind, daß zum Einsetzen oder Herausnehmen einer Blitzschutzkarte möglichst wenig Bauraum erforderlich ist.

Aus diesen Gründen für raumsparende Anordnungen sind
die Blitzschutzkarten vorteilhaft mit ihrer langen
Kante im Hauptverteiler montiert und ragen mit der kurzen Kante in den Montageraum. Um jedch viele Blitzschutzkarten anbringen zu können, ist eine Montage abweichend von einer Senkrechten zur Ebene der Leiterplatte 31 des Hauptverteilers wenig erfolgversprechend,
weil dadurch das Auswechseln erschwert wird.

Zur sicheren Parallelführung der Blitzschutzkarten dienen dachförmige Abschrägungen 37 an der Kantenseite,
die der Einsteckseite gegenüberliegt, um den Druck auf
die Giebelkante 38, die als Druckfläche verbleibt,
gleichmäßig zu verteilen. Aus den gleichen Gründen ist
als Ausziehhilfe zentral ein Fingerloch 39 angebracht.

Der Bauraum zum Anbringen von Blitzschutzkarten wird
insbesondere durch Verlegen großvolumiger, gemeinsam
benutzbarer Bauelemente, und zwar der Überspannungsableitungsröhren 12 und der Zenerdioden 13 in einen
Kasten 22 außerhalb der Leiterplatte 31 des Hauptverteilers verringert.

Bezugszeichen:

| | |
|---|---|
| a1 bis b3 | Fernsprechader |
| K, L | Sammelleitung |
| 10, 11 | Diode |
| 12 | Überspannungsableiter |
| 13 | Zenerdiode |
| 14 | Erdeleitung |
| 22 | Kasten |
| 30 | Hauptverteiler |
| 31 | Leiterplatte des Hauptverteilers |
| 32 | Kontaktblock |
| 33 | Rangierstecker |
| 34 | durchkontaktierter Anschluß |
| 35 | Blitzschutzkarte |
| 36 | Führungsleiste |
| 37 | Abschrägung |
| 38 | Giebelkante |
| 39 | Fingerloch |

Ansprüche

1. Schaltungsanordnung zum Abfangen überhöhter Spannungen in Adern elektronischer Anlagen, insbesondere für Nebenstellen-Vermittlungsanlagen, mit Gasentladungsröhren und belastbaren Dioden mit Begrenzungseigenschaften, dadurch gekennzeichnet, daß die Adern (a1 bis b3), durch Richtleiter (10, 11) voneinander getrennt, je einer Sammelleitung (K, L) eines Leitungspaares aufgeschaltet sind und daß an je eine Sammelleitung (K, L) mindestens eine Überspannungsableitungsröhre (12) und eine belastungsfähige Begrenzungsdiode (13) parallel gegen Erde (14) geschaltet sind.

2. Schaltungsanordnung nach Anspruch 1, dadurch gekennzeichnet, daß je eine Leitung (a1 bis b3) eines Fernsprechadernpaares mit je zwei gegensinnig gerichteten Richtleitern (10, 11) an eine Sammelleitung (K, L) angeschlossen ist.

3. Schaltungsanordnung nach Anspruch 1 oder 2, dadurch gekennzeichnet, daß die Richtleiter (10, 11) mehrerer Fernsprechadern (a1 bis b3) auf einer im Hauptverteiler (30) einer Vermittlungsanlage montierbaren Leiterplatte (31) zusammengefaßt sind.

4. Schaltungsanordnung nach Anspruch 1, 2 oder 3, dadurch gekennzeichnet, daß als Begrenzungsdioden Zenerdioden verwendet werden.

Fig. 1

K

L

10

11

12

13

14

K

L

$a_3$  $b_3$  $a_2$  $b_2$  $a_1$  $b_1$  II  I

30    34    33    32

22    36    37    38    39    35

Fig. 2    zu TE KA DE P 80445

0034288

Europäisches
Patentamt

EUROPÄISCHER RECHERCHENBERICHT

Nummer der Anmeldung

EP 81 10 0685.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B2 - 2 034 392 (SIEMENS AG) <br> * Spalte 2, Zeilen 31 bis 63; Fig. 1 * <br> -- | 1,2,4 |
| | GB - A - 1 436 625 (K.K. SANKOSHA) <br> * Seite 1, Zeilen 9 bis 95, <br> Seite 3, Zeilen 93 bis 123; Fig. 3 * <br> -- | 1,2 |
| | FR - A1 - 2 382 787 (CLAUDE) <br> * Seite 3, Zeile 8 bis Seite 5, <br> Zeile 4; Fig. * <br> -- | 4 |
| A | IBM TECHNICAL DISCLOSURE BULLETIN, <br> Band 21, Nr. 3, August 1978 <br> New York <br> B.C. DILLON et al. "Transient Protection <br> for Controlled Access System" <br> Seiten 904 bis 905 <br> -- | 3 |
| D,A | DE - A1 - 2 754 409 (N.V. PHILIPS) <br> * Seiten 3 bis 6, letzter Absatz; <br> Fig. 1, 2 * <br> ---- | |

**KLASSIFIKATION DER ANMELDUNG (Int. Cl.³)**

H 02 H    9/04
H 02 H    9/06
H 04 M    3/18

**RECHERCHIERTE SACHGEBIETE (Int. Cl.³)**

H 02 H    9/04
H 02 H    9/06
H 04 M    3/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-05-1981 | LEMMERICH |

EPA form 1503.1    06.78